# DEMANDE DE BREVET EUROPEEN

(11) **EP 2 883 763 A1**
(43) Date de publication de la demande: **17.06.2015**
(21) Numéro de dépôt: 14195973.4
(22) Date de dépôt: 02.12.2014
(51) Int. Cl.: B60S 1/38

(54) **Balai d'essuie-glace pour un système d'essuyage d'une vitre de véhicule et son procédé d'assemblage**

(30) Priorité: 16.12.2013 FR 1362711
(71) Demandeur: Valeo Systèmes d'Essuyage, 78321 Le Mesnil Saint Denis (FR)
(72) Inventeur: Thebault, Denis, 63000 Clermont Ferrand (FR); Carraro, Philippe, 63450 St-Amant-Tallende (FR)
(74) Mandataire: Callu Danseux, Violaine

(57) **Abrégé**

L'invention concerne un balai d'essuie-glace pour un système d'essuyage d'une vitre de véhicule, en particulier automobile, comprenant :
- une lame d'essuyage (16),
- un élément de support allongé élastique en forme de bande (18),
- un organe longitudinal (30) de maintien de la lame (16) qui comprend un premier logement longitudinal (32) de réception d'un talon (34) de la lame (16) et un second logement longitudinal (42) de réception dudit élément de support (18), et
- un corps longitudinal (14) qui forme un déflecteur aérodynamique (20) et qui comprend des moyens d'accrochage sur l'organe de maintien (30), où le corps longitudinal (14) est fixé de manière non détachable à l'organe de maintien (30).

## Description

### DOMAINE TECHNIQUE

La présente invention concerne un balai d'essuie-glace pour un système d'essuyage d'une vitre de véhicule, en particulier automobile, un système d'essuyage d'une vitre de véhicule, ainsi qu'un procédé d'assemblage d'un balai d'essuie-glace de véhicule.

### ETAT DE L'ART

Typiquement, un balai d'essuie-glace pour un système d'essuyage d'une vitre de véhicule automobile comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins un élément de support allongé élastique en forme de bande, aussi appelé vertèbre de rigidification, qui confère éventuellement un cintrage à la lame d'essuyage, de manière à favoriser l'application de cette lame sur le parebrise.

Certains balais d'essuie-glace sont équipés d'un organe de maintien de la lame auquel est fixé un corps porteur d'un déflecteur aérodynamique destiné à améliorer les performances aérodynamiques du balai et assurer son plaquage sur le pare brise. L'organe de maintien comprend en général un premier logement de réception d'un talon de la lame et un second logement de réception de l'élément de support. Le corps comprend des moyens de fixation à l'organe de maintien et ledit déflecteur aérodynamique.

On a constaté qu'en utilisation, le corps de ce type de balai peut se détacher de l'organe de maintien, en particulier du fait des forces exercées les écoulements d'air sur le déflecteur du corps, lorsque le véhicule roule à une vitesse relativement importante.

L'invention propose une solution simple, efficace et économique à ce problème.

### EXPOSE DE L'INVENTION

L'invention propose un balai d'essuie-glace pour un système d'essuyage d'une vitre de véhicule, en particulier automobile, comprenant :
- une lame d'essuyage,
- un élément de support allongé élastique en forme de bande,
- un organe longitudinal de maintien de la lame qui comprend un premier logement longitudinal de réception d'un talon de la lame et un second logement longitudinal de réception dudit élément de support, et
- un corps longitudinal qui forme un déflecteur aérodynamique et qui comprend des moyens d'accrochage sur l'organe de maintien,
caractérisé en ce que le corps longitudinal est fixé de manière non détachable à l'organe de maintien.

Dans la présente demande, on entend par fixation non détachable, une fixation non amovible ou une fixation à demeure. Deux éléments fixés de manière non détachable ne peuvent pas être démontés facilement l'un de l'autre. Plus précisément, deux éléments fixés de manière non détachable ne peuvent pas être séparés l'un de l'autre sans dégrader au mois l'un de ces éléments. Par exemple, dans le cas où un élément est séparé d'un autre élément auquel il était fixé de manière non détachable, cette séparation peut entraîner un déchirement de l'un des éléments. Cette dégradation peut empêcher de reproduire la fixation de ces éléments dans l'état d'origine de cette fixation (avant séparation des éléments). Dans l'exemple précité, même si ces éléments sont à nouveau fixés l'un à l'autre, ils ne peuvent pas l'être exactement comme à l'origine du fait du déchirement de l'un des éléments.

Comme indiqué dans ce qui précède, il est envisageable de supprimer une fixation non détachable entre deux éléments (se traduisant par une dégradation du type précité) si une force de traction suffisante est appliquée sur l'un des éléments par rapport à l'autre élément. La résistance à l'arrachement de cette fixation par essai de traction peut être utilisée pour quantifier cette fixation non détachable, et est par exemple supérieure ou égale à 50N dans le cadre de l'invention.

Selon l'invention, le corps longitudinal est fixé de manière non détachable à l'organe de maintien, ce qui permet de résoudre le problème précité de détachement involontaire du corps longitudinal vis-à-vis de l'organe de maintien. L'élément de support n'est pas affecté par cette fixation non détachable dans le sens où il est envisageable qu'il reste démontable par rapport à l'organe de maintien et au corps longitudinal du balai.

Les moyens d'accrochage du corps longitudinal peuvent être fixés de manière non détachable à des moyens d'accrochage complémentaire de l'organe de maintien.

Le corps longitudinal peut comprendre deux crochets longitudinaux qui sont fixés de manière non détachable à des crochets longitudinaux de l'organe de maintien, respectivement.

Les crochets longitudinaux du corps longitudinal peuvent être sensiblement coplanaires. Les crochets longitudinaux de l'organe de maintien peuvent être sensiblement coplanaires.

Avantageusement, la fixation non détachable est réalisée par au moins un point ou cordon de soudure ou de colle entre le corps longitudinal et l'organe de maintien. Le point ou cordon de soudure peut être un point ou cordon de soudure à chaud ou par ultrasons.

Chaque crochet du corps longitudinal peut être fixé sur le crochet correspondant de l'organe de maintien par au moins un point ou cordon de soudure ou de colle.

La fixation non détachable peut ainsi être réalisée avec apport de matière (colle) ou sans apport de matière (soudure). Le soudage peut en effet être réalisé en chauffant (directement ou par ultrasons) les matériaux du corps longitudinal et de l'organe de maintien, de façon à ce que leurs matériaux se diffusent l'un dans l'autre ou se mélangent l'un avec l'autre.

L'organe de maintien et le corps longitudinal sont en général réalisés en matériau plastique. Le soudage peut être provoqué en chauffant leurs matériaux entre 200 et 300°C par exemple.

On comprend que, dans le cas d'un collage, la séparation du corps longitudinal de l'organe de maintien va entraîner une dégradation du corps longitudinal ou de l'organe de maintien telle qu'un déchirement d'au moins l'un de ces éléments et/ou des résidus de colle difficiles à retirer sur au moins l'un de ces éléments. Dans le cas d'un soudage qui se traduirait par une diffusion du matériau de l'un des éléments dans celui de l'autre élément, la séparation du corps longitudinal de l'organe de maintien va entraîner une dégradation importante du corps longitudinal ou de l'organe de maintien car une partie importante de l'un des éléments risque d'être arrachée lors la séparation.

Il est ainsi facilement identifiable si le corps longitudinal et l'organe de maintien d'un balai selon l'invention sont dans leur état de fixation d'origine ou s'ils ont été séparés l'un de l'autre.

Le balai peut comprendre, à chacune de ses extrémités longitudinales, un embout d'extrémité qui est monté sur des parties d'extrémité du corps longitudinal et de l'organe de maintien.

Dans le cas où la lame du balai est usée et doit être retirée du reste du balai en vue de son remplacement, il est ainsi envisageable de retirer les embouts d'extrémité du balai pour pouvoir retirer la lame. La fixation non détachable du corps longitudinal à l'organe de maintien ne gêne ainsi pas cette opération.

Au moins un point ou cordon de soudure ou colle peut être situé à proximité de chaque embout d'extrémité.

Lesdits premier et second logements de l'organe de maintien peuvent être configurés pour recevoir par coulissement longitudinal le talon de la lame et l'élément de support, respectivement.

L'élément de support peut s'étendre au-dessus du talon de la lame. Le balai selon l'invention peut en outre comprendre :
- au moins un élément longitudinal de chauffage, et/ou
- au moins un conduit interne de circulation de fluide, tel qu'un liquide lave glace.

La présente invention concerne également un système d'essuyage d'une vitre de véhicule, en particulier automobile, comprenant au moins un balai tel que décrit ci-dessus.

La présente invention concerne encore un procédé d'assemblage d'un balai d'essuie-glace pour un système d'essuyage d'une vitre de véhicule, en particulier automobile, ce balai comprenant :
- une lame d'essuyage,
- un élément de support allongé élastique en forme de bande,
- un organe longitudinal de maintien de la lame qui comprend un premier logement longitudinal de réception d'un talon de la lame et un second logement longitudinal de réception dudit élément de support, et
- un corps longitudinal qui forme un déflecteur aérodynamique et qui comprend des moyens d'accrochage sur l'organe de maintien,
le procédé comprenant les étapes consistant à :
a) insérer par coulissement le talon de la lame et l'élément de support respectivement dans les premier et second logements de l'organe de maintien, et
b) accrocher le corps longitudinal sur l'organe de maintien,
caractérisé en ce qu'il comprend une étape supplémentaire consistant à fixer de manière non détachable le corps longitudinal à l'organe de maintien, par exemple par collage ou soudage.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage selon l'art antérieur,
- la figure 2 est une vue schématique en coupe d'un balai d'essuie-glace,
- les figures 3 à 5 sont des vues schématiques en coupe de variantes de réalisation du balai d'essuie-glace selon l'invention, et
- les figures 6 et 7 sont des vues schématiques en coupe du balai d'essuie-glace de la figure 3 et illustrent des étapes d'un procédé selon l'invention d'assemblage de ce balai.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales (respectivement avant et arrière) correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

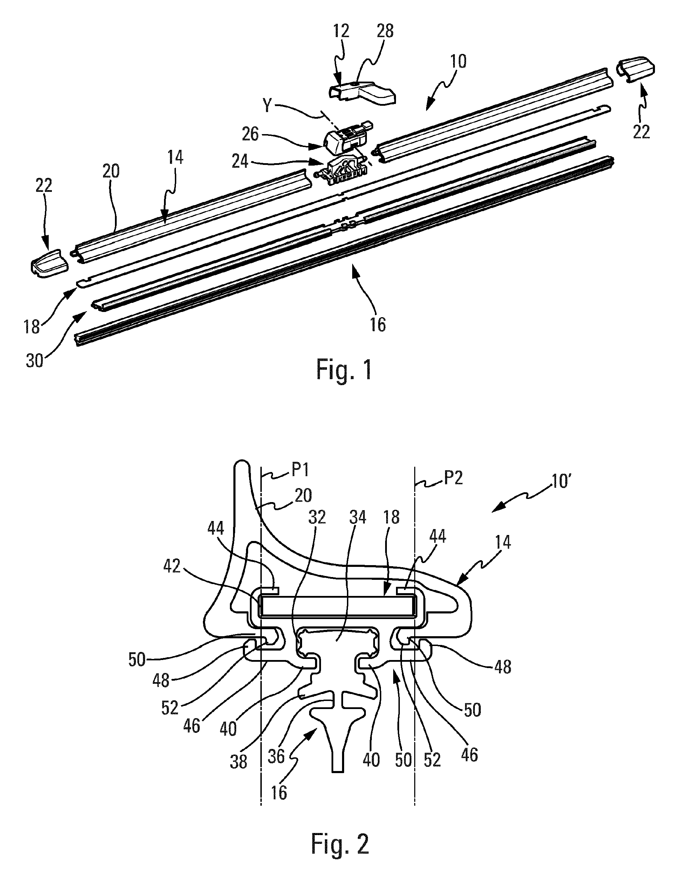

Il est illustré à la figure 1 un système selon l'art antérieur d'essuie-glace d'un pare-brise de véhicule, en particulier automobile. Ce système comprend un balai longitudinal 10 d'essuyage du pare-brise et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins un élément de support 18 de manière à favoriser l'application de la lame 16 sur la vitre du véhicule.

Le corps longitudinal 14 du balai 10 comporte un déflecteur aérodynamique supérieur 20 destiné à améliorer le fonctionnement du système d'essuyage, le but de ce déflecteur 20 étant d'améliorer le plaquage du balai sur le pare-brise et donc la performance aérodynamique du système.

Le balai 10 comprend en outre des embouts ou agrafes d'accrochage 22 de la lame 16 et de l'élément de support 18 sur le corps longitudinal, ces agrafes 22 étant situées à chacune des extrémités longitudinales du corps longitudinal 14.

Le corps longitudinal 14 du balai est ici réalisé en deux parties indépendantes qui sont disposées sensiblement bout à bout et raccordées l'une à l'autre par un connecteur 24 intermédiaire. Ce connecteur 24 est donc intercalé entre les deux parties du corps longitudinal 14 et comprend des moyens de fixation à ces parties.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de balai d'essuie-glace selon lequel le balai comprend en outre un organe longitudinal de maintien de la lame qui porte la lame et l'élément de support et sur lequel est accroché le corps du balai.

La figure 2 représente un balai d'essuie-glace 10' de ce type, les éléments déjà décrits dans ce qui précède étant désignés dans ce qui suit par les mêmes chiffres de référence.

Ainsi, les références 14, 16, 18, 20 désignent respectivement le corps longitudinal, la lame d'essuyage, l'élément de support et le déflecteur du balai 10'.

L'organe de maintien 30 du balai 10' comprend un premier logement ou logement inférieur 32 de réception d'un talon longitudinal 34 de la lame 16. La lame 16 est par exemple du type sapin, bien connu de l'homme du métier. Son extrémité supérieure est reliée par une charnière 36 et un organe d'amortissement 38 au talon 34. De façon connue, en fonctionnement, la lame 16 peut venir en butée sur l'organe 38 qui amortit son retournement vers l'avant ou vers l'arrière.

Le logement 32 est configuré pour recevoir par coulissement longitudinal le talon 34 de la lame 16. Ce logement 32 est délimité par deux parois latérales dont les extrémités inférieures sont chacune reliées à un rebord longitudinal 40. Ces rebords 40 sont sensiblement coplanaires et s'étendent l'un vers l'autre. Ils délimitent entre eux une fente dans laquelle peut coulisser et est montée une partie inférieure amincie du talon 34 qui a une section sensiblement en forme de T.

L'organe de maintien 30 comprend un second logement ou logement supérieur 42 de réception de l'élément de support 18, qui s'étend ainsi au dessus du talon 34 de la lame.

Le logement 42 est configuré pour recevoir par coulissement longitudinal l'élément de support 18. Ce logement 42 est délimité par deux parois latérales dont les extrémités supérieures sont chacune reliées à un rebord longitudinal 44. Ces rebords 44 sont sensiblement coplanaires et s'étendent l'un vers l'autre.

L'organe de maintien 30 comprend en outre deux crochets longitudinaux latéraux 46. Ces crochets 46 sont sensiblement coplanaires, chaque crochet 46 s'étendant latéralement du côté opposé à l'autre crochet. Le crochet 46 situé à l'avant du balai s'étend ainsi vers l'avant et le crochet 46 situé à l'arrière du balai s'étend vers l'arrière. Chaque crochet 46 comprend à son extrémité libre une dent longitudinale 48 d'accrochage

Le corps longitudinal 14 du balai comprend à son extrémité inférieure des moyens d'accrochage sur l'organe de maintien 30. Dans l'exemple représenté, le corps longitudinal 14 comprend deux crochets longitudinaux latéraux 50 qui sont destinés à coopérer avec les crochets 46 de l'organe de maintien.

Les crochets 50 sont sensiblement coplanaires et s'étendent l'un vers l'autre pour définir entre eux une fente dans laquelle peut coulisser et est montée l'organe 30. Le crochet 50 situé à l'avant du balai s'étend ainsi vers l'arrière et le crochet 46 situé à l'avant du balai s'étend vers l'avant. Chaque crochet 50 comprend à son extrémité libre une dent longitudinale 52 d'accrochage destinée à coopérer avec la dent 48 du rebord 46 correspondant de l'organe pour limiter les risques de détachement accidentel du corps longitudinal vis-à-vis de l'organe de maintien.

Comme cela est visible en figure 2, en position de montage, chaque crochet 50 s'étend au-dessus d'un crochet 46, ces deux crochets 46, 50 étant destinés à coopérer ensemble pouvant être considérés comme superposés ou empilés l'un sur l'autre dans un plan vertical P1 (ou P2 pour les autres crochets) parallèle à l'axe longitudinal du balai.

Le corps longitudinal 14 peut être monté sur l'organe de maintien 30 d'au moins deux façons. Il est par exemple possible de positionner le corps longitudinal et l'organe de maintien bout à bout et de les faire coulisser l'un dans l'autre de façon à ce que leurs crochets 46, 50 glissent l'un sur l'autre dans la position représentée en figure 2. Il est également possible d'engager l'un des crochets 50 du corps longitudinal dans le crochet 46 correspondant de l'organe de maintien 30 et de déformer élastiquement le corps longitudinal de façon à amener son autre crochet 50 à s'engager dans le crochet 46 correspondant de l'organe. On comprend également que cette fixation est ici réversible puisqu'il suffit de répéter ces opérations en sens inverse pour démonter le corps longitudinal de l'organe de maintien.

Selon l'invention, le balai comprend en outre des moyens de fixation non détachable du corps longitudinal à l'organe de maintien, qui empêchent ou qui rendent difficile la séparation du corps longitudinal de l'organe de maintien.

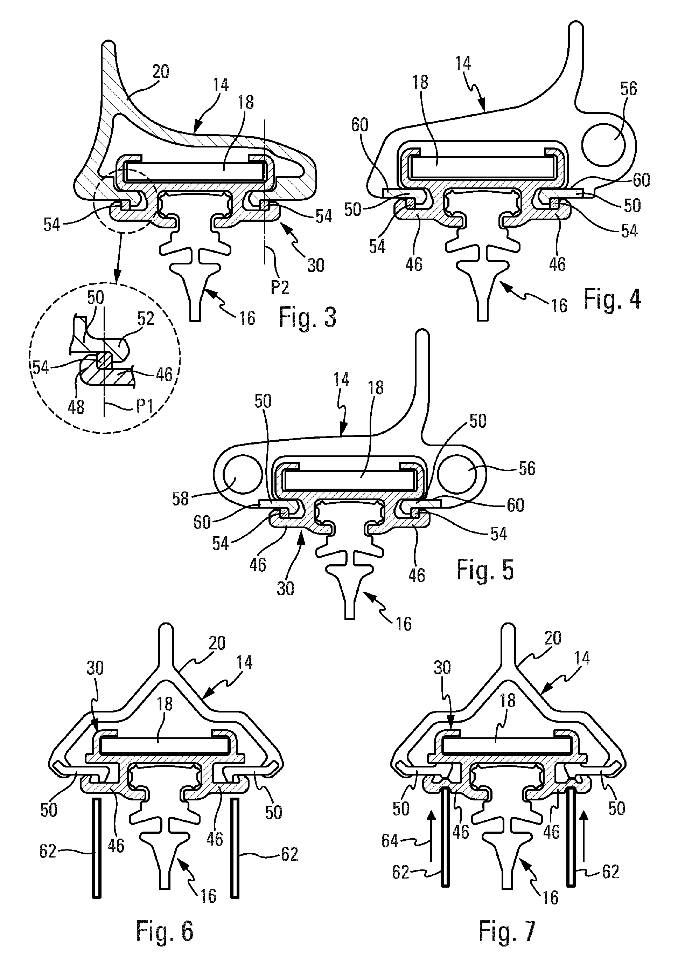

Les figures 3 à 5 représentent différents modes de réalisation de l'invention.

La figure 3 représente un balai du type de celui représenté en figure 2, les éléments déjà décrits dans ce qui précède étant désignés dans ce qui suit par les mêmes chiffres de référence.

Par rapport au balai de la figure 2, le balai de la figure 3 comporte en outre des moyens de fixation non détachable du corps longitudinal 14 à l'organe 30, ces moyens de fixation étant ici obtenus par soudage ou collage des crochets 46, 50 entre eux.

Au moins un point ou cordon 54 de soudure ou de colle est ici prévu entre chaque crochet 46 de l'organe 30 et le crochet 50 correspondant du corps longitudinal 14, ce point ou ce cordon 54 étant ici situé sensiblement dans le plan P1 ou P2 précité.

La colle utilisée peut être du type thermofusible, qui a l'avantage d'être une colle à prise rapide car elle durcit rapidement lors de son refroidissement.

Le soudage peut être réalisé à chaud au moyen d'un fer à souder par exemple ou par ultrasons. Le soudage est ainsi réalisé en chauffant directement ou par ultrasons les matériaux du corps longitudinal 14 et de l'organe 30 de façon à ce que ces matériaux se diffusent l'un dans l'autre ou se mélangent. L'organe de maintien 30 et le corps longitudinal 14 sont en général réalisés en matériau plastique. Le soudage peut être provoqué en chauffant leurs matériaux entre 200 et 300°C et par exemple de 270°C environ.

Les figures 4 et 5 représentent des variantes de réalisation du balai selon l'invention qui comprend ici un conduit interne 56 de circulation de fluide dans le cas de la figure 4 et deux conduits internes 56, 58 de circulation de fluide dans le cas de la figure 5, le fluide étant ici un liquide lave glace.

Les conduits internes 56, 58 sont formés dans les corps longitudinal 14 des balais et s'étendent sur sensiblement toute leur longueur. Ils sont formés sur les côtés des corps longitudinal 14, les deux conduits de la figure 5 étant situés dans un même plan passant sensiblement par l'élément de support 18. Chaque conduit 56, 58 a une forme en section sensiblement circulaire. En variante, elle pourrait être non circulaire (ovale, etc.).

Il est envisageable que les crochets 50 du corps longitudinal 14 soient réalisés dans un matériau différent de celui du reste du corps longitudinal, comme cela est représenté par les traits 60 aux figure 4 et 5. Ceci permet de réaliser les crochets 50 dans un matériau optimisé pour la fixation non détachable envisagée. Ce corps longitudinal de type bi-matière peut être réalisé par co-extrusion.

Il est également envisageable que les crochets 46 de l'organe soient réalisés dans un matériau différent de celui du reste de l'organe pour les mêmes raisons. Cet organe de type bi-matière peut également être réalisé par co-extrusion.

Bien que cela ne soit pas représenté, les balais selon l'invention pourraient être équipés d'au moins un élément longitudinal chauffant, par exemple du type résistif, cet élément s'étendant sur sensiblement toute la longueur des balais.

Le balai comprend de préférence des embouts d'extrémité (similaires à ceux référencés 22 en figure 1) à ses extrémités longitudinales, chacun de ces embouts étant monté sur des parties d'extrémité du corps longitudinal 14 et de l'organe 30. Dans un mode particulier de réalisation de l'invention, un point de soudure peut être réalisé entre chaque crochet 46 et le crochet 50 correspondant, à proximité de chaque embout d'extrémité, par exemple au moyen du procédé décrit dans ce qui suit.

Les figures 6 et 7 illustrent un exemple de mise en oeuvre d'une étape d'un procédé pour l'assemblage d'un balai selon l'invention, ce procédé comprenant plusieurs étapes non représentées parmi lesquelles :
- le talon 34 de la lame 16 est inséré par coulissement dans le logement 32 de l'organe 30,
- l'élément de support 18 est inséré par coulissement dans le logement 42 de l'organe 30, et
- le corps longitudinal 14 est accroché sur l'organe 30 en engagent les crochets 50 du corps longitudinal sur les crochets 46 de l'organe de maintien.

Les figures 6 et 7 illustrent une étape supplémentaire du procédé selon laquelle le corps longitudinal 14 est fixé de manière non détachable à l'organe 30, par soudage dans l'exemple représenté.

Le soudage est ici réalisé entre les crochets 46, 50, comme décrit dans ce qui précède en référence à la figure 3, au moyen d'un fer à souder à chaud comprenant deux tiges 62 chauffées parallèles dont les extrémités libres sont dans un premier temps mises en contact avec les surfaces inférieures des crochets 46 de l'organe 30. Ces tiges 62 sont ensuite déplacées en translation verticale vers le haut (flèches 64), de façon à ce qu'elles traversent les crochets 46 par fusion de leur matériau et viennent ensuite au contact des crochets 50 du corps longitudinal 14. Ceci va entraîner également la fusion du matériau des crochets 50 qui va alors se diffuser dans le matériau des crochets 46 ou se mélanger à ce matériau, et assurer la solidarisation des crochets 46, 50 entre eux, qui sont ainsi fixés de manière non détachable.

La soudure des crochets 46, 50 entraîne donc une fusion de leurs matériaux et une déformation des crochets qui peuvent être troués par le passage des tiges 62 et comprendre des bourrelets de matière sur le pourtour de ces trous.

Il est à noter que des variantes de réalisation sont bien sûr possibles. Notamment il est aussi possible, dans un mode de réalisation supplémentaire non représenté, que l'organe de maintien 30 comprenne des fentes transversales sensiblement rectilignes, afin d'augmenter la souplesse de l'organe 30, en particulier en flexion. De telles fentes sont préférablement ménagées sur les crochets 46, les dents longitudinales 48 d'accrochage et/ou les rebords longitudinaux 40, à intervalles réguliers sur toute la longueur de l'organe de maintien 30.

## Revendications

1. Balai d'essuie-glace pour un système d'essuyage d'une vitre de véhicule, en particulier automobile, comprenant :
- une lame d'essuyage (16),
- un élément de support allongé élastique en forme de bande (18),
- un organe longitudinal (30) de maintien de la lame (16) qui comprend un premier logement longitudinal (32) de réception d'un talon (34) de la lame (16) et un second logement longitudinal (42) de réception dudit élément de support (18), et
- un corps longitudinal (14) qui forme un déflecteur aérodynamique (20) et qui comprend des moyens d'accrochage sur l'organe de maintien (30), **caractérisé en ce que** le corps longitudinal (14) est fixé de manière non détachable à l'organe de maintien (30).

2. Balai selon la revendication 1, **caractérisé en ce que** les moyens d'accrochage du corps longitudinal (14) sont fixés de manière non détachable à des moyens d'accrochage complémentaire de l'organe de maintien (30).

3. Balai selon la revendication 1 ou 2, **caractérisé en ce que** le corps longitudinal (14) comprend deux crochets longitudinaux (50) qui sont fixés de manière non détachable à des crochets longitudinaux (46) de l'organe de maintien (30), respectivement.

4. Balai selon la revendication 3, **caractérisé en ce que** les crochets longitudinaux (50) du corps longitudinal (14) sont sensiblement coplanaires et/ou les crochets longitudinaux (46) de l'organe de maintien (30) sont sensiblement coplanaires.

5. Balai selon l'une des revendications précédentes, **caractérisé en ce que** la fixation non détachable est réalisée par au moins un point ou cordon (54) de soudure ou de colle entre le corps longitudinal (14) et l'organe de maintien (30).

6. Balai selon la revendication 5, **caractérisé en ce que** le point ou cordon (54) de soudure est un point ou cordon de soudure à chaud ou par ultrasons.

7. Balai selon la revendication 5, en dépendance de la revendication 3 ou 4, **caractérisé en ce que** chaque crochet (50) du corps longitudinal (14) est fixé sur le crochet (46) correspondant de l'organe de maintien (30) par au moins un point ou cordon (54) de soudure ou de colle.

8. Balai selon l'une des revendications précédentes, **caractérisé en ce qu'**il comprend, à chacune de ses extrémités longitudinales, un embout d'extrémité qui est monté sur des parties d'extrémité du corps longitudinal (14) et/ou de l'organe de maintien (30).

9. Balai selon la revendication 8, en dépendance de la revendication 5, 6 ou 7, **caractérisé en ce qu'**au moins un point ou cordon (54) de soudure ou colle est situé à proximité de chaque embout d'extrémité.

10. Balai selon l'une des revendications précédentes, **caractérisé en ce que** lesdits premier et second logements (32, 42) sont configurés pour recevoir par coulissement longitudinal le talon (34) de la lame (16) et l'élément de support (18), respectivement.

11. Balai selon l'une des revendications précédentes, **caractérisé en ce que** l'élément de support (18) s'étend au-dessus du talon (34) de la lame (16).

12. Balai selon l'une des revendications précédentes, **caractérisé en ce qu'**il comprend au moins un élément longitudinal de chauffage.

13. Balai selon l'une des revendications précédentes, **caractérisé en ce qu'**il comprend au moins un conduit interne (56, 58) de circulation de fluide, tel qu'un liquide lave glace.

14. Système d'essuyage d'une vitre de véhicule, en particulier automobile, comprenant au moins un balai selon l'une des revendications précédentes.

15. Procédé d'assemblage d'un balai d'essuie-glace pour un système d'essuyage d'une vitre de véhicule, en particulier automobile, ce balai comprenant :
- une lame d'essuyage (16),
- un élément de support allongé élastique en forme de bande (18),
- un organe longitudinal (30) de maintien de la lame qui comprend un premier logement longitudinal (32) de réception d'un talon (34) de la lame et un second logement longitudinal (42) de réception dudit élément de support (18), et
- un corps longitudinal (14) qui forme un déflecteur aérodynamique (20) et qui comprend des moyens d'accrochage sur l'organe de maintien (30),
le procédé comprenant les étapes consistant à :
c) insérer par coulissement le talon de la lame et l'élément de support respectivement dans les premier et second logements de l'organe de maintien, et
d) accrocher le corps longitudinal sur l'organe de maintien,
**caractérisé en ce qu'**il comprend une étape supplémentaire consistant à fixer de manière non détachable le corps longitudinal à l'organe de maintien, par exemple par collage ou soudage.
